# EUROPÄISCHE PATENTSCHRIFT

(11) **EP 2 044 825 B1**
(45) Veröffentlichungstag und Bekanntmachung des Hinweises auf die Patenterteilung: **10.05.2017**
(21) Anmeldenummer: 08014991.7
(22) Anmeldetag: 25.08.2008
(51) Int. Cl.: A01B 71/06, A01D 34/66

(54) **Landwirtschaftliche Arbeitsmaschine**
Agricultural machine
Machine agricole

(30) Priorität: 04.10.2007 DE 202007013869 U
(43) Veröffentlichungstag der Anmeldung: 08.04.2009
(73) Patentinhaber: AGCO Feucht GmbH, 90537 Feucht (DE)
(72) Erfinder: Kohl, Berhard, 90537 Feucht (DE); Breitenbach, Patric, 97799 Detter (DE)
(74) Vertreter: Grünecker Patent- und Rechtsanwälte PartG mbB

(56) Entgegenhaltungen:
- EP-A- 0 570 314
- EP-A- 0 679 327
- EP-A- 1 405 553
- DE-U1- 20 006 371

## Beschreibung

Die Erfindung betrifft eine landwirtschaftliche Arbeitsmaschine gemäß Oberbegriff des Patentanspruchs 1.

Bei landwirtschaftlichen Maschinen mit einer seitlich neben der Spur des die landwirtschaftliche Maschine schiebenden oder schleppenden Fahrzeugs arbeitender Arbeitseinheit erstreckt sich vom Zapfwellenanschluss in etwa in der Längsmittelachse des Fahrzeuges eine Antriebs-Gelenkwelle zu dem Winkelgetriebe, das z.B. an dem mit dem Dreipunktanbau des Fahrzeugs verbundenen Tragrahmen angeordnet ist. Das Winkelgetriebe treibt eine annähernd quer zur Fahrtrichtung liegende, teleskopierbare Verteiler-Gelenkwelle, die zur eigentlichen Arbeitseinheit, z.B. einer Mäheinheit mit Arbeitswerkzeugen, oder zu einem Getriebe der Arbeitseinheit führt. Die Arbeitseinheit lässt sich zum Fahren auf öffentlichen Straßen aus ihrer seitlich auskragenden Arbeitsstellung in die in etwa in Fahrtrichtung orientierte Transportstellung umstellen, z.B. hinter das Fahrzeug schwenken, so dass die Arbeitseinheit im Wesentlichen innerhalb der durch das Fahrzeug bestimmten Breite angeordnet ist. Dabei wird die quer verlaufende Verteiler-Gelenkwelle jedoch an dem winkelgetriebeseitigen Kreuzgelenk unzulässig stark abgewinkelt, wodurch leicht Schäden an der Verteiler-Gelenkwelle entstehen können. Außerdem nähert sich bei der Umstellung der Arbeitseinheit in die Transportstellung die Arbeitseinheit dem Winkelgetriebe so weit, dass die Verteiler-Gelenkwelle beträchtlich verkürzt werden muss. Dieser beträchtliche, erforderliche Verkürzungsweg bedingt relativ kurze Schiebeprofile (Keilprofile), die in der Arbeitsstellung der Arbeitseinheit und bei ausgezogener Verteiler-Gelenkwelle eine zu geringe Überdeckung haben. Es ist deshalb bekannt, die Verteiler-Gelenkwelle vor dem Umstellvorgang der Arbeitseinheit abzunehmen und in eine dafür vorgesehene Aufbewahrungsstelle zu überführen.

Aus EP 0 679 327 A ist eine gattungsgemäße landwirtschaftliche Maschine bekannt, bei dem nach der Umstellung aus der Arbeitsstellung in die Transportstellung die Gelenkwelle zwischen dem Winkelgetriebe am Tragrahmen und dem Anschlussgetriebe der Arbeitseinheit nicht gelöst, sondern über einen Knickwinkel von mehr als 90° abgeknickt ist.

Aus EP-A-993 763 ist es bekannt, die Verteiler-Gelenkwelle bei der Umstellung der Arbeitseinheit in die Transportstellung am Winkelgetriebe zu belassen, und die Verteiler-Gelenkwelle mit einem speziellen Schutz auszustatten, der die notwendige extreme Abwinklung ermöglicht. Für die extreme Abwinkelung ist es jedoch erforderlich, dass sich die Kreuzgelenke selbsttätig in eine die Abwinkelung zulassende Drehwinkelstellung einstellen können. Bei Fahrzeugen mit Zapfwellenbremse ist dies jedoch nur bedingt möglich, so dass dann die Kreuzgelenke leicht beschädigt werden können. Die Gefahr einer Beschädigung tritt auch dann auf, wenn die Umstellung bei noch laufendem Antrieb erfolgt oder der Antrieb in der Transportstellung eingeschaltet wird.

Eine aus EP 1 405 553 A bekannte landwirtschaftliche Maschine weist ein auf fixierten Bodenlaufrädern geschlepptes Mähwerk auf, das an einen quer zur Fahrtrichtung orientierten Tragrahmen angeschlossen und in der Position relativ zum Tragrahmen durch eine Strebe gesichert ist. Der Tragrahmen ist an einem Ende über eine schwenkbare Deichsel mit einem Schwenklager am Schlepper gekoppelt. Die relative Schwenkposition der Deichsel gegenüber dem Tragrahmen wird durch einen zwischen der Deichsel und dem Tragrahmen eingesetzten Hydraulikzylinder eingestellt. In der Arbeitsstellung, in der das Mähwerk seitlich versetzt gegenüber der Fahrspur des Schleppers gezogen wird, schließt die Deichsel mit dem Tragrahmen einen Winkel >90° ein. Der Antriebsstrang ist für die Arbeitsstellung optimiert, d. h. erste und zweite Gelenkwellen schließen an einem Winkelgetriebe einen Winkel von etwa 90° ein und sind annähernd gleichlang. Dazu ist das Winkelgetriebe relativ weit außerhalb des Tragrahmens platziert. In der Transportstellung, in der das Mähwerk in der Fahrspur des Schleppers gezogen wird, schließt die Deichsel hingegen mit dem Tragrahmen einen Winkel deutlich <90° ein. Diese relative Schwenkbewegung der Deichsel am Tragrahmen wird über eine Kopplung abgegriffen und auf das Winkelgetriebe übertragen, das die erste, mit der Zapfwelle des Schleppers verbundene Gelenkwelle mit der zweiten, zu einem weiteren Winkelgetriebe am Tragrahmen führenden Gelenkwelle koppelt. Das Winkelgetriebe wird in etwa in Längsrichtung des Tragrahmens, das heißt quer zur Fahrtrichtung und zum Tragrahmen hin verstellt, um bei einer Umstellung der Maschine aus der Transportstellung in die Arbeitsstellung einen operierenden Winkel der Gelenkwelle zu reduzieren und vor allem die Transportbreite zu verringern. Dabei erfährt die zweite Gelenkwelle eine erhebliche Verkürzung.

Der Erfindung liegt die Aufgabe zugrunde, eine landwirtschaftliche Maschine der eingangs genannten Art anzugeben, bei der bei einer Umstellung der Arbeitseinheit relativ zum Tragrahmen in die Transportstellung die Gelenkwellen an das Winkelgetriebe angeschlossen bleiben können und dennoch extreme Abwinkelungen und Längenänderungen der Gelenkwellen vermieden werden.

Die gestellte Aufgabe wird mit den Merkmalen des Patentanspruchs 1 gelöst.

Da das Winkelgetriebe bei der Umstellung der Arbeitseinheit zumindest in die Transportstellung in die Ausgleichsposition verlagert wird, in der aus der Umstellung resultierende Gelenkwellen-Längenänderungen und -Abwinkelungen minimiert werden, ergibt sich für jede Gelenkwelle eine nur moderate Längenveränderung und Abwinkelung, so dass ohne zusätzliche Schutzvorrichtung, beispielsweise der Verteiler-Gelenkwelle, die an ihr zulässige Abwinkelung nicht überschritten wird. Das Winkelgetriebe ist an einem Schwenkarm angeordnet, der an einem Tragrahmen schwenkgelagert ist, der an die Anbauvorrichtung des Fahrzeuges anbaubar ist und die Arbeitseinheit abstützt. Hierbei kann der Schwenkarm um eine in etwa zum Boden senkrechte Schwenkachse am Tragrahmen schwenken. Die Kopplungsvorrichtung überträgt beim Umstellen auftretende Relativbewegungen zwischen der Arbeitseinheit und dem Tragrahmen auf das Winkelgetriebe. Beim Umstellen der Arbeitseinheit in die Transportstellung wird durch eine entsprechend ausgelegte Anlenkkinematik das Winkelgetriebe so verlagert, dass es in die für den Schutz der Gelenkwellen weitestgehend optimale Ausgleichsposition gelangt. In anderen Worten wird durch die Verlagerung des Winkelgetriebes zumindest ein Teil der für die Umstellung erforderlichen Längenänderungen und Abwinkelungen vom Winkelgetriebe kompensiert, das hierfür ausweicht und beim Umstellen in die Arbeitsstellung wieder in die dann optimale Position zurückgestellt und dort festgehalten wird. Dabei können durch die Ausweichbewegung des Winkelgetriebes die Längenänderungen und/oder Abwinkelungen auf beide Gelenkwellen verteilt werden.

Bei einer baulich einfachen Ausführungsform weist die Kopplungsvorrichtung eine Koppelstange auf, die, vorzugsweise, zur Feinanpassung längenverstellbar sein kann, und zwischen der Arbeitseinheit und dem Winkelgetriebe bzw. dem das Winkelgetriebe tragenden Schwenkarm angelenkt ist. Der Schwenkarm schreibt eine optimale Verlagerungsbewegung entlang eines Kreisbogenabschnittes vor. Die Koppelstange führt diese Schwenkbewegung des Winkelgetriebes aus und stützt das Winkelgetriebe in der jeweils mit der Momentanstellung der Arbeitseinheit korrelierten Stellung.

Unter anderem aus Stabilitätsgründen kann die Arbeitseinheit mit einem am Tragrahmen um ein Achse verschwenkbaren Hebelarm verbunden sein. Die Achse ist zur Schwenkachse des Schwenkarmes in etwa parallel und von dieser beabstandet. Die Koppelstange wird an der Seite der Arbeitseinheit am Hebelarm angelenkt. Daraus resultiert eine jederzeit stabile Halterung des Winkelgetriebes.

Um die Arbeitseinheit zwischen der Arbeitsstellung und der Transportstellung zu bewegen, oder zumindest in einer Richtung zu bewegen, ist zwischen dem Hebelarm am Tragrahmen und dem Tragrahmen ein Arbeitseinheits-Umstellantrieb angelenkt, beispielsweise ein einfach wirkender oder doppelt wirkender Hydraulikzylinder. Um für das Winkelgetriebe eine Untersetzung der abgegriffenen Relativbewegung zu erzielen, befindet sich zweckmäßig ein Anlenkpunkt der Koppelstange am Hebelarm näher bei der Achse des Hebelarms als ein Anlenkpunkt des Arbeitseinheits-Umstellantriebs. In diesem Fall wird ein Teil der vom Umstellantrieb generierten Kraft zum Verstellen des Winkelgetriebes abgezweigt.

Um für die Gelenkwellen eine optimale Positionierung zu erzielen, ist es zweckmäßig, wenn der Schwenkarm mit seiner Schwenklagerung an der Unterseite des Tragrahmens angeordnet ist.

Ferner weisen beide Gelenkwellen abwinkelbare Bereiche auf, wobei zumindest ein abnehmbarer Bereich in jeder Gelenkwelle möglichst nahe beim Winkelgetriebe angeordnet sein sollte. Die Verteiler-Gelenkwelle ist an ein im Abstand von dem Hebelarm an der Arbeitseinheit angeordnetes Getriebe angeschlossen. In diesem Fall ist es zweckmäßig, nahe beider Anschlussenden der Verteiler-Gelenkwelle je einen abwinkelbaren Bereich vorzusehen. Daraus resultieren nach einer Umstellung der Arbeitseinheit in die Transportstellung zwei nur moderate Abwinkelungen in der Verteiler-Gelenkwelle, und auch nur eine moderate Längenveränderung.

Bei einer konkreten Ausführungsform erstreckt sich der Schwenkarm am Tragrahmen in der Arbeitsstellung der Arbeitseinheit von der Schwenkachse in etwa entgegengesetzt zur Fahrtrichtung nach hinten. Hingegen ist der Schwenkarm in der Ausgleichsposition des Winkelgetriebes relativ zum Tragrahmen von der Achse weg unter einem spitzen Winkel zur Hauptebene des Tragrahmens verschwenkt.

Günstig ist es, wenn der Abstand eines Zentrums des Winkelgetriebes von der Schwenkachse des Schwenkarmes in etwa der Hälfte des Abstandes zwischen den Anschlussenden jeder Gelenkwelle entspricht.

Günstig ist es ferner, wenn der abwinkelbare Bereich jeder Gelenkwelle näher beim Zentrum des Winkelgetriebes liegt als die Schwenkachse des Schwenkarmes.

Schließlich ist es im Hinblick auf eine optimale Kinematik der Gelenkwellen zweckmäßig, wenn das Winkelgetriebe an einem vom Tragrahmen nach unten abgewinkelten Ende des Schwenkarmes angebracht wird.

Eine Ausführungsform des Erfindungsgegenstandes wird anhand der Zeichnungen erläutert. Es zeigen:
- Fig. 1: eine Schemadraufsicht auf eine landwirtschaftliche Arbeitsmaschine mit in einer Arbeitsstellung befindlicher Arbeitseinheit,
- Fig. 2: eine Detaildruntersicht zu Fig. 1, mit entfernten Gelenkwellen,
- Fig. 3: eine Druntersicht zu Fig. 1, analog zu Fig. 2, mit montierten Gelenkwellen,
- Fig. 4: eine Perspektivansicht der landwirtschaftlichen Arbeitsmaschine in der Arbeitsstellung der Arbeitseinheit, von links hinten, und
- Fig. 5: eine Druntersicht, analog zu Fig. 3, mit montierten Gelenkwellen und in der Transportstellung der Arbeitseinheit der landwirtschaftlichen Arbeitsmaschine.

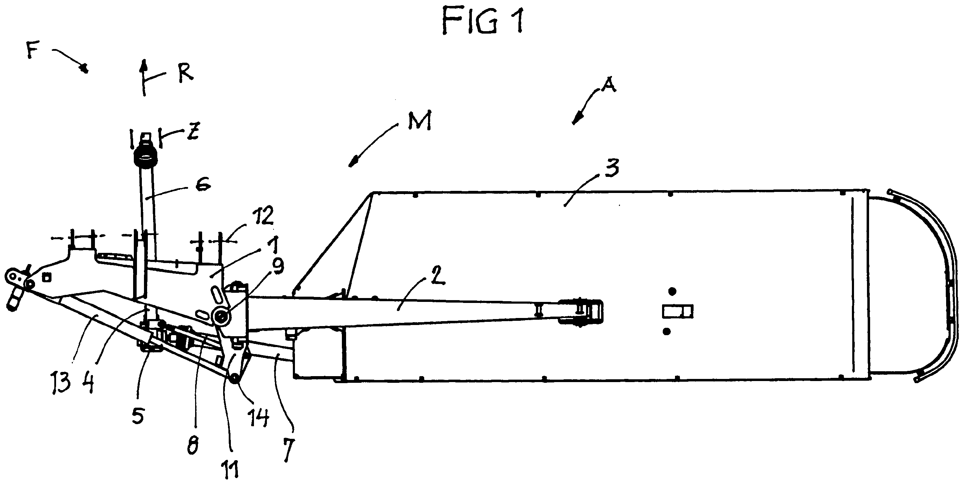

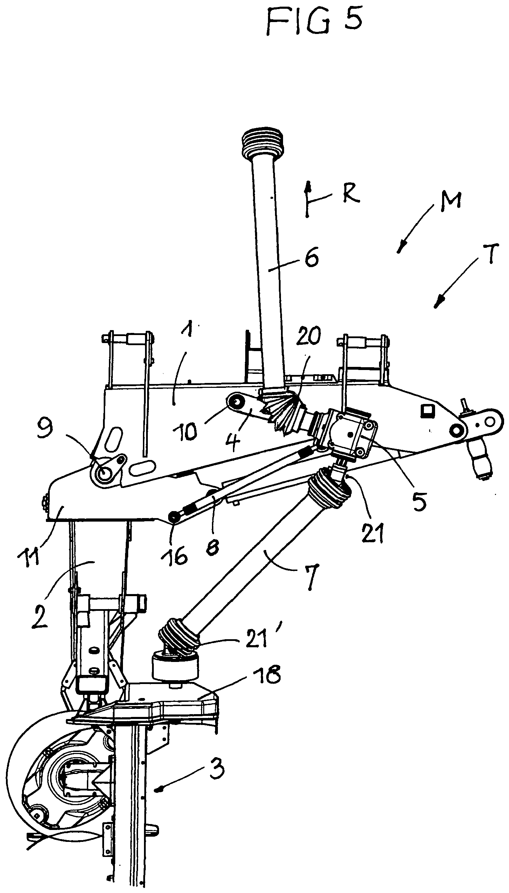

Als Beispiel einer landwirtschaftlichen Arbeitsmaschine M wird anhand der Fig. 1 bis 5 ein Mähwerk erläutert, das sich in Fig. 1 in einer Arbeitsstellung A und in Fig. 5 in einer Transportstellung T befindet. Die Erfindung ist jedoch auch bei anderen landwirtschaftlichen Maschinen anwendbar. Die landwirtschaftliche Arbeitsmaschine M weist eine langgestreckte Arbeitseinheit 3 mit zumindest einem nicht näher hervorgehobenen, antreibbaren Arbeitswerkzeug auf, die in der Arbeitsstellung A in etwa quer zur Fahrtrichtung R eines Fahrzeuges F (beispielsweise eines Schleppers) seitlich auskragt. Die Arbeitseinheit 3 ist mittels eines Tragarmes 2 an einem Hebelarm 11 angebracht, der um eine in etwa zum Boden senkrechte Achse 9 zwischen der zumindest einen Arbeitsstellung A von Fig. 1 und einer Transportstellung T gemäß Fig. 5 verschwenkbar an einem Tragrahmen 1 angebracht ist. Der Tragrahmen 1 ist mit Anschlussvorrichtungen zum Anbringen an einer Anbauvorrichtung 12 des Fahrzeuges F versehen, beispielsweise dem Dreipunktanbau eines Schleppers.

Das Fahrzeug F besitzt einen Zapfwellenanschluss Z, von dem die Antriebsleistung für die Arbeitswerkzeuge der Arbeitseinheit 3 abgenommen und über eine Antriebsverbindung auf die Arbeitswerkzeuge übertragen wird. Teil der Antriebsverbindung sind eine Antriebs-Gelenkwelle 6, die sich vom Zapfwellenanschluss Z bis zu einem dem Tragrahmen 1 zugeordneten Winkelgetriebe 5 erstreckt, sowie eine Verteiler-Gelenkwelle 7, die sich von dem Winkelgetriebe 5 zur Arbeitseinheit 3 erstreckt. Jede Gelenkwelle 6, 7 besitzt zumindest einen abwinkelbaren Bereich. Zumindest die Verteiler-Gelenkwelle 7 ist längenveränderbar. Das Winkelgetriebe 5 ist an einem am Tragrahmen 1 schwenkgelagerten Schwenkarm 4 fest angebracht, der sich in der Arbeitsstellung A in Fig. 1 in etwa in Verlängerung der Antriebs-Gelenkwelle 6 erstreckt. Der Schwenkarm 4 bzw. das Winkelgetriebe 5 ist mittels einer Kopplungsvorrichtung K geführt verlagerbar, wobei die Kopplungsvorrichtung K eine, vorzugsweise längenverstellbare, Koppelstange 8 aufweist, die zwischen dem Winkelgetriebe 5 bzw. dem Schwenkarm 4 und dem Hebelarm 11 angelenkt ist.

Bei der gezeigten Ausführungsform weist die landwirtschaftliche Arbeitsmaschine M auch einen Arbeitseinheits-Umstellantrieb 13 auf, beispielsweise einen einfach wirkenden oder doppelt wirkenden Hydraulikzylinder 13, der zwischen dem Tragrahmen 1 und dem Hebelarm 11 angelenkt ist (Anlenkstelle 14).

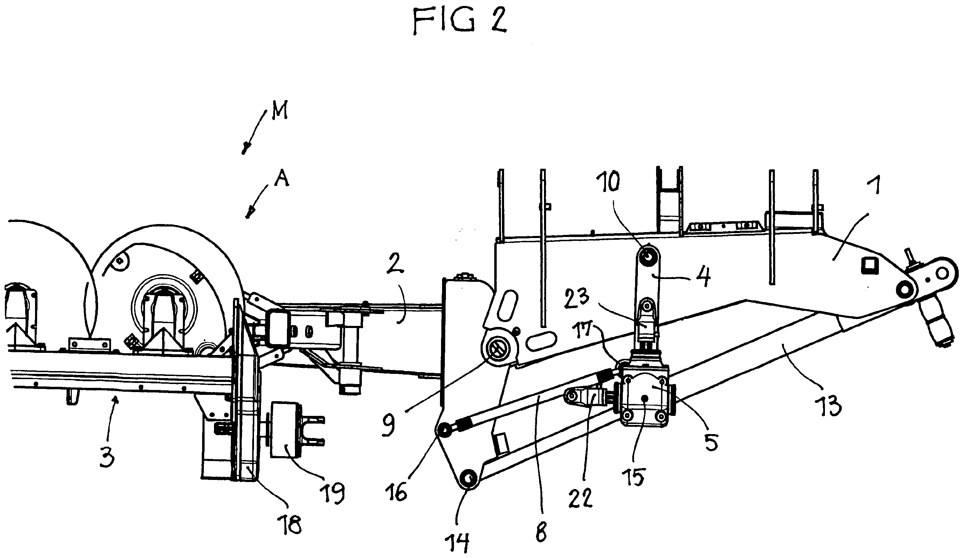

In der Druntersicht von Fig. 2 (die Gelenkwellen 6, 7 sind der Übersichtlichkeit halber demontiert) ist zu sehen, dass die Antriebseinheit 3 über ein Getriebe 18 verfügt, aus dem sich ein Anschlussstutzen 19, gegebenenfalls mit einer Überlastkupplung, beabstandet zum Tragarm 2 und im Wesentlichen zu diesem parallel erstreckt. Die Koppelstange 8 ist am Hebelarm 11 in einem Anlenkpunkt 16 und am Winkelgetriebe 5 in einem Anlenkpunkt 17 schwenkbar angelenkt. Der Arbeitseinheits-Umstellantrieb 13 ist am Hebelarm 11 im Anlenkpunkt 14 angelenkt. Der Anlenkpunkt 16 der Koppelstange 8 befindet sich zwischen der Achse 9 des Hebelarmes 11 am Tragrahmen 1 und dem Anlenkpunkt 14. Das Winkelgetriebe 5 ist zumindest bei der gezeigten Ausführungsform ein 90°-Winkelgetriebe mit zwei Anschlusswellenstutzen 22, 23, die Kreuzgelenkteile aufweisen können. Die Schwenklagerung des Schwenkarmes 4 am Tragrahmen 1 weist eine in etwa zur Achse 9 parallele Schwenkachse 10 auf, die unterseitig am Tragrahmen 1 nahe bei dessen Vorderseite platziert ist.

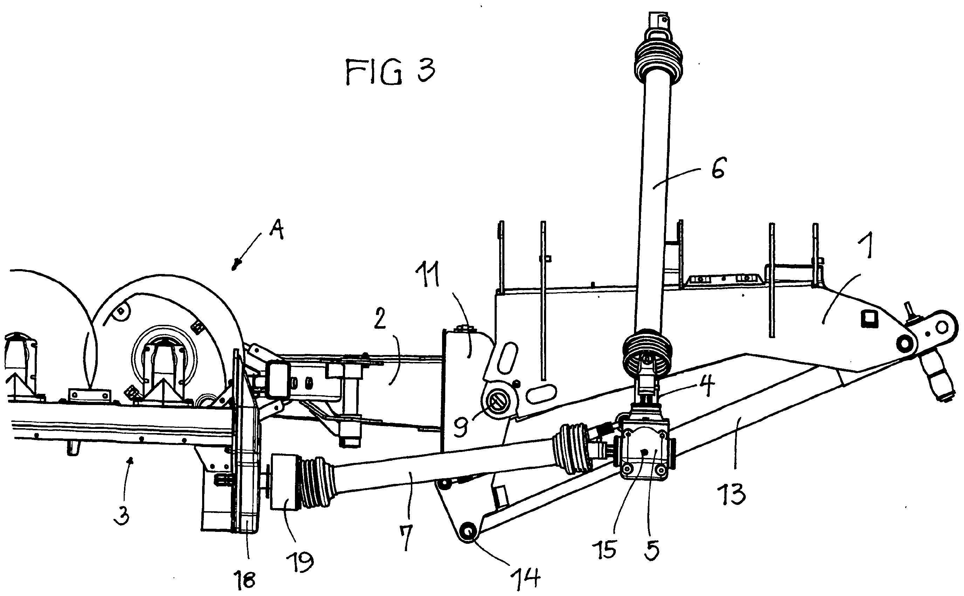

In der Druntersicht von Fig. 3 (Arbeitsstellung A) sind die beiden Gelenkwellen 6, 7 montiert. Ansonsten entspricht Fig. 3 der Fig. 2.

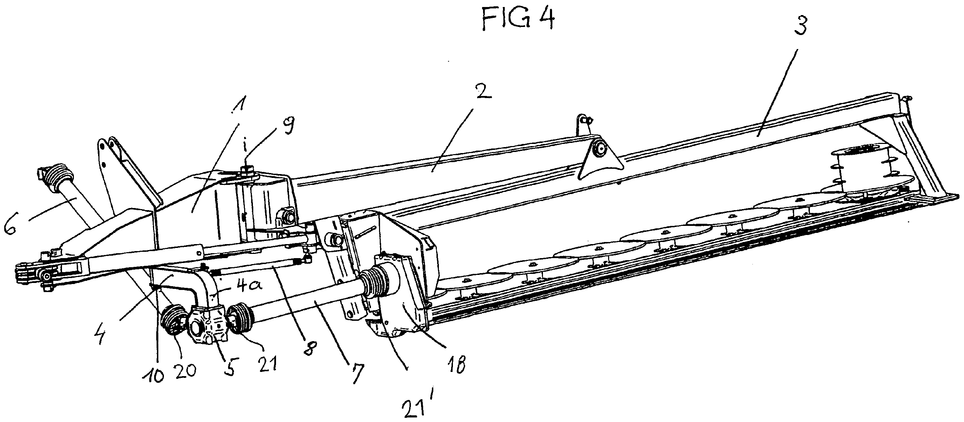

In der Perspektivdarstellung in Fig. 4 ist erkennbar, dass jede Gelenkwelle 6, 7 nahe beim Winkelgetriebe 5 einen abwinkelbaren Bereich 20, 21 enthält. Der Schwenkarm 4 weist ein vom Tragrahmen 1 nach unten abgebogenes Ende 4a auf, an dem das Winkelgetriebe 5 festgelegt ist. Die Verteiler-Gelenkwelle 7 besitzt nahe beim Getriebe 18 einen zweiten abwinkelbaren Bereich 21'. Die Koppelstange 8 greift hier direkt am Schwenkarm 4 an.

In der Druntersicht der landwirtschaftlichen Arbeitsmaschine M von Fig. 5 (Transportstellung T) ist die Arbeitseinheit 3 um die Achse 9 in etwa parallel zur Fahrtrichtung R und entgegengesetzt zu dieser nach hinten umgestellt. Die Koppelstange 8 hat den Schwenkarm 4 gegenüber der Schwenkstellung von Fig. 2 um die Schwenkachse 9 entgegengesetzt zum Uhrzeigersinn so weit verschwenkt, dass das ausweichende Winkelgetriebe 5 in eine Ausgleichsposition verlagert ist, in der die aus der Umstellung resultierende Gelenkwellen-Längenänderungen und/oder Abwinkelungen minimiert bzw. auf beide Gelenkwellen 6, 7 verteilt sind, d.h., die Verteiler-Gelenkwelle 7 ist in beiden Bereichen 21, 21' in etwa gleich abgewinkelt, während die Antriebs-Gelenkwelle 6 im Bereich 20 mit einem Beugewinkel abgeknickt ist, der deutlich geringer als 90° ist. Der Schwenkarm 4 schließt mit der Hauptebene des Tragrahmens 1 einen spitzen Winkel ein. Das Winkelgetriebe 5 ist von der Achse 9 weg und auch in Fahrtrichtung R verlagert.

Wird die Arbeitseinheit 3 wieder in die Arbeitsstellung A gemäß den Fig. 1 bis 3 umgestellt, dann wird das Winkelgetriebe 5 wieder in die gezeigte Position zurückgeführt und in dieser mittels der Koppelstange 8 über den dann verriegelten Hebelarm 11 abgestützt.

## Patentansprüche

1. Landwirtschaftliche Arbeitsmaschine (M), insbesondere Mähwerk, zum Anbau an ein einen Zapfwellenanschluss (Z) aufweisendes Fahrzeug, mit zumindest einer langgestreckten Arbeitseinheit (3), die an einem an eine Hubvorrichtung (12) des Fahrzeugs anbaubaren Tragrahmen (1) zwischen wenigstens einer quer zur Fahrtrichtung (R) orientierten Arbeitsstellung (A) und einer in Fahrtrichtung (R) orientierten Transportstellung (T) umstellbar ist, und der am Tragrahmen (1) ein Winkelgetriebe (5) zugeordnet ist, an das eine zum Zapfwellenanschluss (Z) führende Antriebs-Gelenkwelle (6) und zumindest eine zur Arbeitseinheit (3) führende Verteiler-Gelenkwelle (7) anschließbar oder angeschlossen sind, **dadurch gekennzeichnet, dass** das Winkelgetriebe (5) an einem an dem Tragrahmen (1) schwenkgelagerten Schwenkarm (4) festgelegt ist, der das Winkelgetriebe (5) zumindest bei Umstellen der Arbeitseinheit (3) in die Transportstellung (T) geführt in eine Ausgleichsposition verlagert, in der die aus der Umstellung resultierenden Längenänderungen und/oder Abwinkelungen der Gelenkwellen (6, 7) minimiert und verteilt werden, und dass zum Verlagern und Positionieren des Winkelgetriebes (5) eine mit der Arbeitseinheit (3) verbundene Kopplungsvorrichtung (K) vorgesehen ist, mit der eine aus der Umstellung der Arbeitseinheit (3) resultierende Relativbewegung bzw. relative Positionsänderung zwischen der Arbeitseinheit (3) und dem Tragrahmen (1) direkt oder proportional auf das Winkelgetriebe (5) übertragbar ist.

2. Landwirtschaftliche Arbeitsmaschine gemäß Anspruch 1, **dadurch gekennzeichnet, dass** der Schwenkarm (4) um eine in etwa zum Boden senkrechte Schwenkachse (10) am Tragrahmen (1) schwenkbar ist.

3. Landwirtschaftliche Arbeitsmaschine gemäß Anspruch 1, **dadurch gekennzeichnet, dass** die Kopplungsvorrichtung (K) eine, vorzugsweise längenverstellbare, Koppelstange (8) aufweist, die an der Arbeitseinheit (3) und dem Winkelgetriebe (5) bzw. dem das Winkelgetriebe (5) tragenden Schwenkarm (4) angelenkt ist.

4. Landwirtschaftliche Arbeitsmaschine gemäß wenigstens einem der vorhergehenden Ansprüche, **dadurch gekennzeichnet, dass** die Arbeitseinheit (3) mit einem am Tragrahmen (1) um eine, vorzugsweise zur Schwenkachse (10) in etwa parallele und von dieser beabstandete, Achse (9) verschwenkbaren Hebelarm (11) verbunden ist, und dass die Koppelstange (8) am Hebelarm (11) angelenkt ist.

5. Landwirtschaftliche Arbeitsmaschine gemäß Anspruch 4, **dadurch gekennzeichnet, dass** zwischen dem Hebelarm (11) und dem Tragrahmen (1) ein Arbeitseinheits-Umstell-antrieb (13) angelenkt ist, und dass ein Anlenkpunkt (16) der Koppelstange (8) am Hebelarm (11) näher bei der Achse (9) platziert ist als ein Anlenkpunkt (14) des Antriebseinheits-Umstellantriebs (13).

6. Landwirtschaftliche Arbeitsmaschine gemäß wenigstens einem der vorhergehenden Ansprüche, **dadurch gekennzeichnet, dass** der Schwenkarm (4) an der Unterseite des Tragrahmens (1) angeordnet ist.

7. Landwirtschaftliche Arbeitsmaschine gemäß wenigstens einem der vorhergehenden Ansprüche, **dadurch gekennzeichnet, dass** die Verteiler-Gelenkwelle (7) an ein im Abstand von dem Hebelarm (11) an der Arbeitseinheit (3) angeordnetes Getriebe (18) angeschlossen ist, und dass nahe beider Anschlussenden der Verteiler-Gelenkwelle (7) je ein Knickbereich (21, 21') vorgesehen ist.

8. Landwirtschaftliche Arbeitsmaschine gemäß wenigstens einem der vorhergehenden Ansprüche, **dadurch gekennzeichnet, dass** sich der Schwenkarm (4) am Tragrahmen (1) in der Arbeitsstellung (A) der Arbeitseinheit (3) von der Schwenkachse (10) in etwa entgegengesetzt zur Fahrtrichtung (R) nach hinten erstreckt, und in der Ausgleichsposition von der Achse (9) weg relativ zum Tragrahmen (1) unter einem spitzen Winkel verschwenkt ist.

9. Landwirtschaftliche Arbeitsmaschine gemäß wenigstens einem der vorhergehenden Ansprüche, **dadurch gekennzeichnet, dass** der Abstand eines Zentrums (15) des Winkelgetriebes (5) von der Schwenkachse (10) des Schwenkarmes (4) in etwa der Hälfte des Abstands zwischen den Anschlussenden jeder Gelenkwelle (6, 7) entspricht.

10. Landwirtschaftliche Arbeitsmaschine gemäß wenigstens einem der vorhergehenden Ansprüche, **dadurch gekennzeichnet, dass** ein abwinkelbare Bereich (20, 21) jeder Gelenkwelle (6, 7) näher beim Zentrum (15) des Winkelgetriebes (5) liegt als die Schwenkachse (10) des Schwenkarmes (4).

11. Landwirtschaftliche Arbeitsmaschine gemäß Anspruch 3, **dadurch gekennzeichnet, dass** das Winkelgetriebe (5) an einem vom Tragrahmen (1) nach unten abgewinkelten Ende (4a) des Schwenkarmes (4) angebracht ist.

## Claims

1. Agricultural machine (M), in particular a mower, for mounting on a vehicle comprising a power take-off connection (Z), with at least one elongated operating unit (3), which can be adjusted on a support frame (1) that can be attached to a lifting device (12) of the vehicle between at least one operating position (A) transverse to the direction of travel (R) and a transport position (T) oriented in the direction of travel (R), and to which an angular gear (5) is allocated on the support frame (1), to which an articulated drive shaft (6) leading to the power take-off connection (Z) and at least one articulated distributor shaft (7) leading to the operating unit (3) can be connected or are connected, **characterized in that** the angular gear (5) is fixed to a pivot arm (4) pivotably mounted on the support frame (1), which, at least when adjusting the operating unit (3) into the transport position (T), in a guided manner shifts the angular gear (5) into a balancing position, in which the changes in length and/or angulations of the articulated shafts (6, 7) resulting from the adjustment are minimized and distributed, and that a coupling device (K) is provided, connected to the operating unit (3) for shifting and positioning the angular gear (5), with which a relative movement or relative position change between the operating unit (3) and the support frame (1), resulting from the adjustment of the operating unit (3), is directly or proportionally transferable to the angular gear (5).

2. Agricultural machine according to Claim 1, **characterized in that** the pivot arm (4) is pivotable on the support frame (1) about a pivot axis (10) that is approximately perpendicular to the floor.

3. Agricultural machine according to Claim 1, **characterized in that** the coupling device (K) comprises a preferably length-adjustable coupling rod (8), which is hinged to the operating unit (3) and the angular gear (5) or to the pivot arm (4) holding said angular gear (5).

4. Agricultural machine according to at least one of the preceding claims, **characterized in that** the operating unit (3) is connected to a lever arm (11) on the support frame (1) and is pivotable about an axis (9), which is preferably approximately parallel to and spaced from the pivot axis (10), and that the coupling rod (8) is hinged to the lever arm (11).

5. Agricultural machine according to Claim 4, **characterized in that** an operating unit adjustment drive (13) is hinged on between the lever arm (11) and the support frame (1), and that a hinge point (16) of the coupling rod (8) on the lever arm (11) is positioned closer to the axis (9) than a hinge point (14) of the drive unit adjustment drive (13).

6. Agricultural machine according to at least one of the preceding claims, **characterized in that** the pivot arm (4) is disposed on the underside of the support frame (1).

7. Agricultural machine according to at least one of the preceding claims, **characterized in that** the articulated distributor shaft (7) is connected to a gear mechanism (18) disposed on the operating unit (3) at a distance from the lever arm (11), and that a bend zone (21, 21') is provided in proximity to each of the two connecting ends of the articulated distributor shaft (7).

8. Agricultural machine according to at least one of the preceding claims, **characterized in that**, in the operating position (A) of the operating unit (3), the pivot arm (4) on the support frame (1) extends back from the pivot axis (10) approximately opposite to the direction of travel (R), and in the balancing position is pivoted away from the axis (9) at an acute angle relative to the support frame (1).

9. Agricultural machine according to at least one of the preceding claims, **characterized in that** the distance of a centre (15) of the angular gear (5) from the pivot axis (10) of the pivot arm (4) corresponds to approximately half the distance between the connecting ends of each articulated shaft (6, 7).

10. Agricultural machine according to at least one of the preceding claims, **characterized in that** a bend zone (20, 21) of each articulated shaft (6, 7) is closer to the centre (15) of the angular gear (5) than the pivot axis (10) of the pivot arm (4).

11. Agricultural machine according to Claim 3, **characterized in that** the angular gear (5) is attached on an end (4a) of the pivot arm (4) that is angled down away from the support frame (1).

## Revendications

1. Machine agricole (M), notamment faucheuse, destinée à être montée sur un véhicule comportant un arbre de prise de force (Z), la machine agricole comprenant au moins une unité de travail (3) allongée, qui, sur un cadre porteur (1) pouvant être monté sur un système de relevage (12) du véhicule, peut être transférée entre au moins une position de travail (A) orientée transversalement à la direction de marche (R) et une position de transport (T) orientée dans la direction de marche (R), et une transmission à renvoi d'angle (5) étant associée à l'unité de travail sur le cadre porteur (1), transmission à renvoi d'angle à laquelle peuvent être raccordés ou sont raccordés un arbre articulé d'entraînement (6) menant à l'arbre de prise de force (Z), et au moins un arbre articulé de distribution (7) menant à l'unité de travail (3), **caractérisée en ce que** la transmission à renvoi d'angle (5) est fixée sur un bras pivotant (4), qui est monté pivotant sur le corps porteur (1), et qui, au moins lors du transfert de l'unité de travail (3) à la position de transport (T), déplace la transmission à renvoi d'angle (5), de manière guidée, dans une position de compensation dans laquelle les variations de longueur et/ou les flexions angulaires des arbres articulés (6, 7) résultant du transfert de position, sont minimisées et réparties, et **en ce que** pour déplacer et positionner la transmission à renvoi d'angle (5), il est prévu un dispositif de couplage (K) relié à l'unité de travail (3), à l'aide duquel un mouvement relatif, à savoir une variation relative de position entre l'unité de travail (3) et le cadre porteur (1), résultant du transfert de changement de position de l'unité de travail (3), peut être transmise directement ou de manière proportionnelle à la transmission à renvoi d'angle (5).

2. Machine agricole selon la revendication 1, **caractérisée en ce que** le bras pivotant (4) peut pivoter sur le cadre porteur (1) autour d'un axe de pivotement (10) environ perpendiculaire au sol.

3. Machine agricole selon la revendication 1, **caractérisée en ce que** le dispositif de couplage (K) comprend une barre de couplage (8), de préférence réglable en longueur, qui est articulée sur l'unité de travail (3) et sur la transmission à renvoi d'angle (5) ou respectivement le bras pivotant (4) portant la transmission à renvoi d'angle (5).

4. Machine agricole selon l'une au moins des revendications précédentes, **caractérisée en ce que** l'unité de travail (3) est reliée à un bras de levier (11) pouvant pivoter sur le cadre porteur (1) autour d'un axe (9) de préférence sensiblement parallèle à l'axe de pivotement (10) et espacé de celui-ci, et **en ce que** la barre de couplage (8) est articulée au bras de levier (11).

5. Machine agricole selon la revendication 4, **caractérisée en ce qu'**entre le bras de levier (11) et le cadre porteur (1), est articulé un entraînement de transfert de position d'unité de travail (13), et **en ce qu'**un point d'articulation (16) de la barre de couplage (8) sur le bras de levier (11), est placé plus près de l'axe (9) qu'un point d'articulation (14) de l'entraînement de transfert de position d'unité de travail (13).

6. Machine agricole selon l'une au moins des revendications précédentes, **caractérisée en ce que** le bras pivotant (4) est agencé sur le côté inférieur du cadre porteur (1).

7. Machine agricole selon l'une au moins des revendications précédentes, **caractérisée en ce que** l'arbre articulé de distribution (7) est raccordé à une transmission (18) agencée sur l'unité de travail (3) à distance du bras de levier (11), et **en ce qu'**à proximité des deux extrémités de raccordement de l'arbre articulé de distribution (7) est prévue respectivement une zone de flexion (21, 21').

8. Machine agricole selon l'une au moins des revendications précédentes, **caractérisée en ce que** le bras pivotant (4) sur le cadre porteur (1), dans la position de travail (A) de l'unité de travail (3), s'étend vers l'arrière à partir de l'axe de pivotement (10), sensiblement de manière opposée à la direction de marche (R), et, dans la position de compensation, est pivoté de façon à s'éloigner de l'axe (9) en formant un angle aigu avec le cadre porteur (1).

9. Machine agricole selon l'une au moins des revendications précédentes, **caractérisée en ce que** la distance d'un centre (15) de la transmission à renvoi d'angle (5) à l'axe de pivotement (10) du bras pivotant (4), correspond environ à la moitié de la distance entre les extrémités de raccordement de chaque arbre articulé (6, 7).

10. Machine agricole selon l'une au moins des revendications précédentes, **caractérisée en ce qu'**une zone de flexion angulaire (20, 21) de chaque arbre articulé (6, 7) se situe plus près du centre (15) de la transmission à renvoi d'angle (5) que l'axe de pivotement (10) du bras pivotant (4).

11. Machine agricole selon la revendication 3, **caractérisée en ce que** la transmission à renvoi d'angle (5) est montée à une extrémité (4a) du bras pivotant (4), qui est coudée vers le bas à partir du cadre porteur (1).
